(19) **Europäisches Patentamt**
**European Patent Office**
**Office européen des brevets**

(11) **EP 4 550 169 A1**

(12) **EUROPEAN PATENT APPLICATION**

(43) Date of publication:
**07.05.2025 Bulletin 2025/19**

(21) Application number: **24210366.1**

(22) Date of filing: **01.11.2024**

(51) International Patent Classification (IPC):
**G06F 16/353** (2025.01)

(52) Cooperative Patent Classification (CPC):
**G06F 16/353; G06Q 30/0185; H04L 63/1425;**
G06Q 10/0635

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.11.2023 US 202363547165 P
29.10.2024 US 202418929739**

(71) Applicant: **Dynatrace LLC
Waltham, MA 02451 (US)**

(72) Inventors:
• **ERTL, Otmar**
**Linz (AT)**
• **NATSCHLAEGER, Thomas**
**Linz (AT)**
• **THOMPSON, Guilherme**
**Linz (AT)**

(74) Representative: **Bittner, Thomas L.
Boehmert & Boehmert
Anwaltspartnerschaft mbB
Pettenkoferstrasse 22
80336 München (DE)**

(54) **SEMANTIC ANALYSIS OF SESSION DATA**

(57) The disclosure concerns a computer-implemented method for semantically analyzing session data, a computer-implemented method for identifying fraudulent session data captured in a distributed computing system, and a computer-implemented method for synthetically testing a website. The objective of the disclosure is to propose a similarity measure for session data in order to compare different sessions, such as user sessions or business process journeys, to each other. Another objective of the disclosure is to semantically analyze session data by similarity and to store the analysis result in a database. The objective is solved by receiving session data from a session occurring in the distributed computing system; generating a textual description for the session data; generating a vector embedding from the textual description, where the vector embedding represents the session data; and storing the vector embedding, along with a reference to the session data, in a database.

**Fig. 3**

EP 4 550 169 A1

## Description

The disclosure concerns the technical field of information technology (IT) and more particular, the field of application performance monitoring and observability (short APM). In particular, the disclosure concerns a computer-implemented method for semantically analyzing session data captured in a distributed computing system, a computer-implemented method for identifying fraudulent session data captured in a distributed computing system, and a computer-implemented method for synthetically testing a website.

### Background

According to the user session (also known as a "visit", "journey" or "clickpath") monitoring aspect of APM technology, it is known to collect a sequence of user actions that are performed by the same user in an application during a limited period of time. A single session typically includes multiple pages or view loads, third-party content requests, service requests, and user actions such as clicks or taps. Each user session includes at least one user interaction. The user session data can be used to track, analyze, and optimize user experience. By doing so, potential shortcomings/problems users experience can be identified and remedied. According to the business analytics or business process journey aspect of APM technology, it is known to track, analyze, and optimize critical business processes and transactions, such as adding an item to an online shopping cart, proceeding to check out, selecting the payment method, card verification, payment, order confirmation, etc. The goal of business analytics is to identify circumstances why some users, e.g., stopped before checkout, or more generally, did not proceed to the next stage of the business process. In both use cases, session data, i.e., data from user sessions or data from business process journeys, is collected and systematically analyzed. Due to the inhomogeneity of session data and its potentially large size, it is difficult to compare different sessions to each other. How to improve this, is currently still unknown in the art.

This section provides background information related to the present disclosure which is not necessarily prior art.

### Summary

This section provides a general summary of the disclosure, and is not a comprehensive disclosure of its full scope or all of its features.

The objective of the disclosure is to propose a similarity measure for session data in order to compare different sessions, such as user sessions or business process journeys, to each other. Another objective of the disclosure is to semantically analyze session data by similarity and to store the analysis result in a database. Yet another objective of the disclosure is to find a robust procedure for identifying fraudulent session data captured in a distributed computing environment. Finally, another objective of the disclosure is to find a user-friendly method for synthetically testing a website.

The objective technical problem is solved by a computer-implemented method for semantically analyzing session data captured in a distributed computing system, comprising: receiving, by a computer processor, session data from a session occurring in the distributed computing system; generating, by the computer processor, a textual description for the session data; generating, by the computer processor, a vector embedding from the textual description, where the vector embedding represents the session data; and storing, by the computer processor, the vector embedding, along with a reference to the session data, in a database.

After receiving session data (e.g., data from monitoring user sessions or data from monitoring business journeys) from the distributed computing system, a textual description for the session data is generated. The textual description is used to generate a vector embedding, where the vector embedding represents the semantics of the session data. The text embedding model may be part of a Large Language Model (LLM) offering. Typically, the text embedding model is accessed via an Application Programming Interface, short API. A vector embedding is a high-dimensional vector, typically comprising several hundreds or thousands of integer or floating-point values. The vector embedding generated by the text embedding model is then stored in the database together with a reference, such as a pointer, to the session data. Alternatively, the session data itself is stored in the database. By doing so, the semantic meaning of the session data having a size of many Mega- or even Gigabytes is contained in a vector of some kilobytes. In addition, vector embeddings representing sessions can easily be compared to other embeddings.

Preferably, generating the textual description for the session data is done using a large language model (short LLM), e.g. by prompting the LLM to summarize major events in the session data.

According to another preferred embodiment, generating the vector embedding is done using a text embedding model.

The method may further comprise collecting backend data from host computers in the distributed computing system and/or generating the textual description using the session data and the backend data.

According to a very preferred embodiment of the disclosure, both the session data and data collected from computer hosts during the performance of the session, such as logs, traces, metrics, etc., are used for generating the vector embedding. This allows not just to take *frontend* processes and/or events into account, i.e., events/processes taking place in the memory of the user's web browser, but also to consider *backend* events, logs, traces, metrics occurring on host computers directly or indirectly connected to the user's computer.

After storing vector embeddings in the database, the database can be queried for session data.

Querying preferably comprises: receiving, by a user interface, session data or a textual description for a target session; generating a target vector embedding from the session data or the textual description; and querying the database using the target vector embedding.

The textual description can be e.g., input by a user using a User Interface (UI) or received from another component by a digital interface.

Typically, a similarity measure between the target vector embedding and each vector embedding in the database is computed; the similarity measure is compared to a threshold; and a vector embedding having a similarity measure greater than the threshold is reported to the method customer.

Instead of comparing the target vector embedding with each vector embedding in the database, the vector embeddings stored in the database can be clustered such that similar vector embeddings are contained within a cluster. By doing so, the target vector embedding is compared with all vector embeddings representing clusters (sometimes, these vector embeddings are called centroids) in the database first, and in a subsequent step, similar clusters are queried for the n most similar embeddings.

Basically, the similarity measure can be any measure suitable for comparing vectors, such as the Euclidean distance, the Manhattan distance (L1 Norm), the Jaccard similarity, the Pearson correlation coefficient, the Hamming distance, or the Minkowski distance. Preferably, the similarity measure is the cosine similarity.

The objective technical problem is also solved by a computer-implemented method for identifying fraudulent session data captured in a distributed computing system, comprising: receiving, by a computer processor, new session data from a session occurring in the distributed computing system; generating, by the computer processor, a new vector embedding from the new session data, where the new vector embedding represents the new session data; receiving, by a computer processor, reference session data, where the reference session data is indicative of a fraudulent session; generating, by the computer processor, a reference vector embedding from the reference session data, where the reference vector embedding represents the fraudulent session; comparing, by the computer processor, the new vector embedding to the reference vector embedding; and reporting, by the computer processor, the new session data as being fraudulent in response to the new vector embedding being similar to the reference vector embedding.

The term session data shall cover both session data generated from user monitoring as well as session data generated from monitoring business journeys / business analytics data.

This embodiment allows the identification of fraudulent session data by comparing the vector embedding representing the semantic content of the session data with a reference vector embedding indicative of a fraudulent session. If the vector embedding is similar or highly similar to the reference vector embedding, the session data is either reported to the method customer or labelled as belonging to the class of fraudulent session data.

After labelling the session data, the label, the vector embedding corresponding to the session data together with the session data or a reference to the session data can be stored in a database.

It is preferred also in this case to generate at least one of the new vector embedding or the reference vector embedding using a text embedding model.

According to a preferred embodiment of the disclosure, comparing the new vector embedding to the reference vector embedding includes computing a similarity measure between the new vector embedding and the reference vector embedding and reporting the new session data as being fraudulent in response to the similarity measure exceeding a threshold.

It is advantageous that querying the database using the reference vector embedding, where the database stores a plurality of vector embeddings and each of the plurality of vector embedding represent a session in the distributed computer system, comprises: computing a similarity measure between the reference vector embedding and each of the plurality of the vector embeddings in the database; comparing the similarity measures to a threshold; and tagging select vector embeddings in the database as being fraudulent, where the select vector embedding have a similarity measure greater than the threshold.

Finally, the objective technical problem is also solved by a computer-implemented method for synthetically testing a website, comprising: receiving, by a user interface, a textual description for a target session with the website; generating, by a computer processor, a target vector embedding from the textual description, where the target vector embedding represents the target session; retrieving, by the computer processor, a subset of session data from a database by querying the database using the target vector embedding, where the database stores a plurality of vector embeddings representing sessions with the website; and creating, by the computer processor, synthetic test data for the website from the subset of sessions.

Also in this case it is preferable to generate the target vector embedding using a text embedding model.

Preferably, the method further comprises at least one of: computing a similarity measure between the target vector embedding and vector embeddings in the database; comparing the similarity measures to a threshold; and adding session data to the subset of session data, where the added session data corresponds to vector embeddings having a similarity measure greater than the threshold.

According to a very preferred embodiment, creating synthetic test data is done using process mining (see detailed explanation below).

After generating synthetic test data for a website comprising multiple pairs (action, result) in the synthetic test data, the following steps are performed sequentially: a. applying the action in the pair to the website; b. collecting the feedback to the action from the website; c. comparing the feedback with the result in the pair; d. if the feedback corresponds to the result: process next pair; else: report failed synthetic test. The synthetic test was failed if at least one pair failed, else the synthetic test was passed.

In order to do this for multiple clusters of session data it is preferred to cluster the session data in a database into multiple clusters and to send clusters of session data to the computer-processor in order to sequentially perform synthetic tests for clusters of session data.

This may be done by a computer-implemented method for synthetically testing a website, comprising: clustering, by a computer processor, sessions in a database such that each subset of sessions belonging to a cluster is similar to other sessions in the same cluster; creating, by the computer processor, synthetic test data for the subset of session data in a cluster; generating, by the computer processor, a textual description for the synthetic test data in a cluster; selecting, by a user interface, one or more textual descriptions for synthetic test data; and combining, by the computer processor, synthetic test data corresponding to selected textual descriptions.

Further areas of applicability will become apparent from the description provided herein. The description and specific examples in this summary are intended for purposes of illustration only and are not intended to limit the scope of the present disclosure.

Drawings

The accompanying drawings, which are incorporated in and constitute part of this specification, illustrate embodiments of the disclosure and together with the description, serve to explain the principles of the disclosure. The embodiments illustrated herein are presently preferred, it being understood, however, that the disclosure is not limited to the precise arrangements and instrumentalities shown, wherein:

FIG. 1    shows a screenshot of a user interface for finding similar user sessions in a database related to a reference user session,

FIG. 2    shows a screenshot of a user interface for finding similar user sessions in a database related to a semantic description of a reference user session,

FIG. 3 and 4    show schematics for the semantic analysis of user session data and storing the analysis result in a database,

FIG. 5    shows a schematic for querying a database for similar user session based on a textual description of a reference user session,

FIG. 6 and 7    show schematics for querying a database for finding similar user session based on a reference user session,

FIG. 8    shows the main steps in finding similar session data in a database and for classifying session data,

FIG. 9    shows the main steps in generating a reference session $S_{Ref}$ for synthetic testing a website,

FIG. 10    shows the main steps in generating a suite of reference session $S_{Ref}$ for synthetic testing a website based on clusters of session data, and

FIG. 11    shows the structure of a user session containing multiple events (user actions, errors...) in JSON format.

Corresponding reference numerals indicate corresponding parts throughout the several views of the drawings.

Detailed description

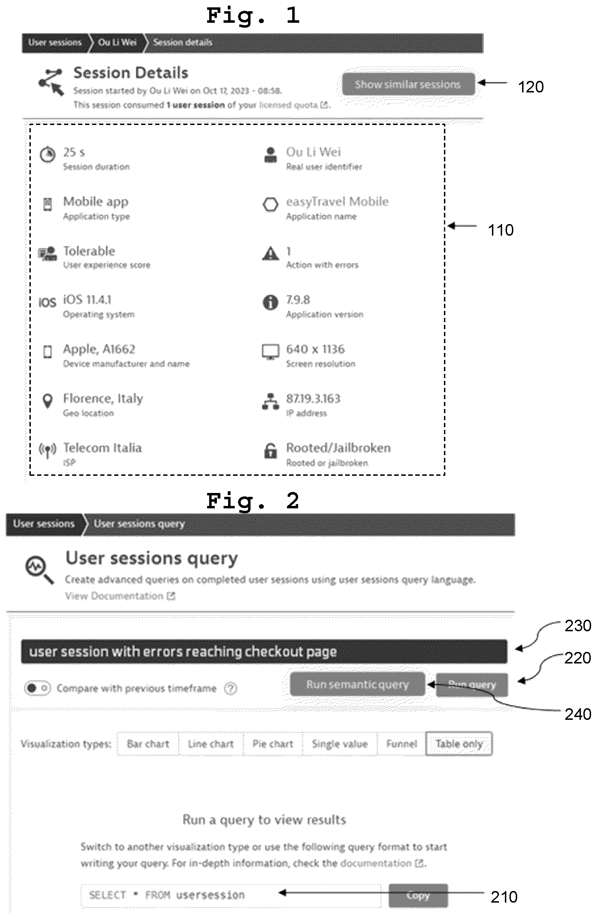

Fig. 1 shows a screenshot of a user interface (short UI) for finding similar user sessions in a database. After selecting a reference user session in the III and showing some metadata 110 for it, the database is queried for similar user sessions by pressing the button 120. After querying the database for similar user sessions, matching user sessions are displayed.

Fig. 2 shows an alternative UI to Fig. 1. In this case, similar user sessions can be found in a database either by traditionally formulating a database query in field 210 and pressing the button 220, or by semantically describing the user session in field 230 and pressing the button 240. In both cases, the database is queried for user sessions having a high similarity. After querying the database, similar user sessions are displayed.

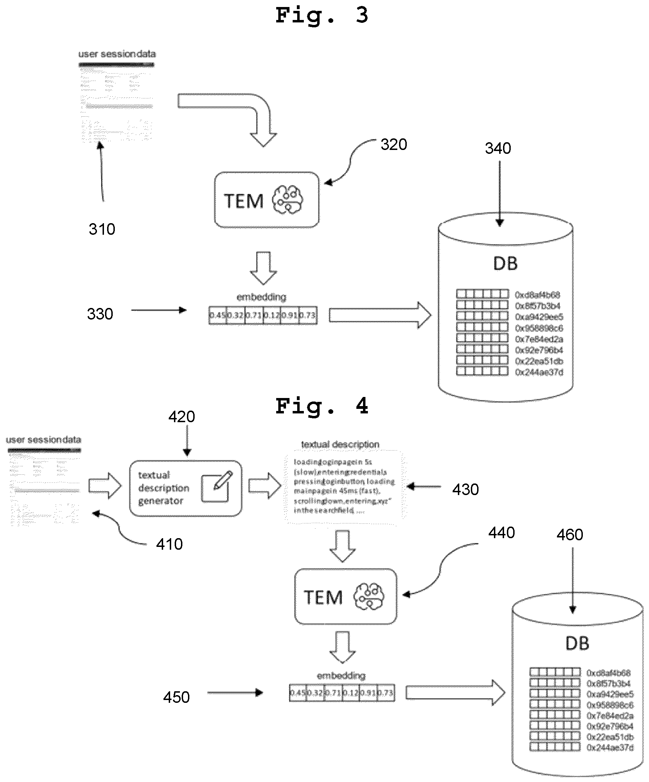

Fig. 3 shows a schematic of the main steps in semantically analyzing user session data and storing the analysis result in a database DB. The session data 310, e.g. data associated to the webpage itself, the Document Object Model DOM of the webpage, and the events associated to the user interaction on the webpage, are semantically analyzed using a text embedding model (short TEM) 320. The result of the semantic analysis is a so-called vector embedding 330, i.e. a vector comprising tens, hundreds, or thousands values, characterizing the user session data 310. Typically, one vector embedding 330 occupies just a few kilobytes of memory. The embedding 330 and a reference to the session data 310 are stored in the database 340.

Also Fig. 4 shows a schematic of the main steps in semantically analyzing user session data and storing the analysis result in a database 460. Contrary to Fig. 3, the user session data 410 is transformed by a textual description generator 420 into a textual description 430 of the session data. The textual description generator 420 can leverage an LLM to generate the text, e.g. by prompting the LLM to summarize the user session data 410. The textual description 430 is then transformed into a vector embedding 450 by a text embedding model (TEM) 440. The embedding 450 and a reference to the session data 410 are stored in a database 460. The textual description generator 420 can be a specialized software application or an LLM.

In an embodiment not shown in the figures, both i) a first embedding 330 directly generated from the user session data 310, and ii) a second embedding 450 generated from a textual description 430 of the user session data 410, are stored in the database DB. By doing so, similar user sessions can be found in the database by querying it based on user session data 310 or a textual description 430 of user session data. Thereby, irrespective of the querying path, i.e. starting from reference session data or a textual description, the same references to stored sessions are found.

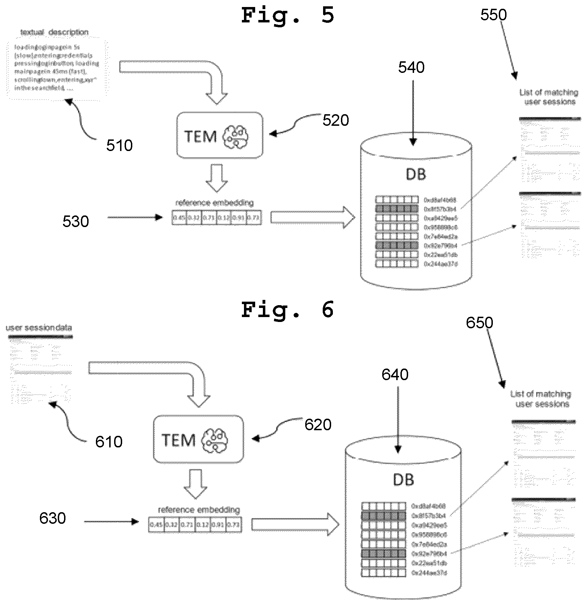

In Fig. 5 a first embodiment of the disclosure for finding similar sessions in a database 540 is shown. E.g. a user enters a textual description 510 into a user interface (see e.g. field 230 in Fig. 2) describing the session to be searched for. Based on the textual description 510, the TEM 520 generates a reference embedding 530 for it. The reference embedding 530 is used to query for similar embeddings stored in the database 540. According to one possibility, the similarity between the reference embedding and a stored embedding is checked by calculating the cosine similarity between the two embeddings. In order to explain this in principle, let us assume a refer-

$$\vec{a} = \begin{pmatrix} 1 \\ 2 \\ 3 \end{pmatrix}$$

ence embedding and a stored embedding

$$\vec{b1} = \begin{pmatrix} 2 \\ 4 \\ 6 \end{pmatrix}$$

. The cosine similarity between the embed-

$$\cos(\phi) = \frac{\vec{a}.\vec{b1}}{|a||b1|}$$

dings $\vec{a}$ and $\vec{b1}$ is defined as resulting in a cosine similarity of 1. Let us show two more simple

$$\vec{b2} = \begin{pmatrix} 3 \\ 3 \\ -3 \end{pmatrix}$$

examples: Assuming a stored embedding $\vec{b2} =$ , the cosine similarity between $\vec{a}$ and $\vec{b2}$ is

$$\cos(\phi) = \frac{\vec{a}.\vec{b2}}{|a||b2|} = 0$$

. Finally, assuming a stored

$$\vec{b3} = \begin{pmatrix} -2 \\ -4 \\ -6 \end{pmatrix}$$

embedding , the cosine similarity be-

$$\cos(\phi) = \frac{\vec{a}.\vec{b3}}{|a||b3|} = -1$$

tween a and $\vec{b3}$ is . In the first case, the angle between the embeddings $\vec{a}$ and $\vec{b1}$ is zero, resulting in a cosine similarity of 1. In the second case, the angle between the embeddings $\vec{a}$ and $\vec{b2}$ is 90° or $\pi/2$ (i.e. perpendicular embeddings), resulting in a cosine similarity of 0. Finally, in the third case, the angle between $\vec{a}$ and $\vec{b3}$ is 180° or $\pi$ (i.e. inverse embeddings), resulting in a cosine similarity of -1. According to one querying method, the cosine similarity between the reference embedding and all stored embeddings is calculated and those user sessions are reported to the query customer having a cosine similarity greater or equal to a threshold t, e.g. cos $(\phi) \geq t$ and t=0.9. Note that the cosine similarity returns a value between 1 and -1, where 1 represents the highest possible similarity.

In Fig. 6 another embodiment for finding similar sessions is shown. Instead of entering a textual description into the UI (see block 510 in Fig. 5), reference user session data 610 is selected such that the TEM 620 calculates a reference embedding 630 characterizing the session data. The querying of the database 640 itself can be performed as in Fig. 5, such that sessions 650 having high similarity to the reference session data are reported to the query customer.

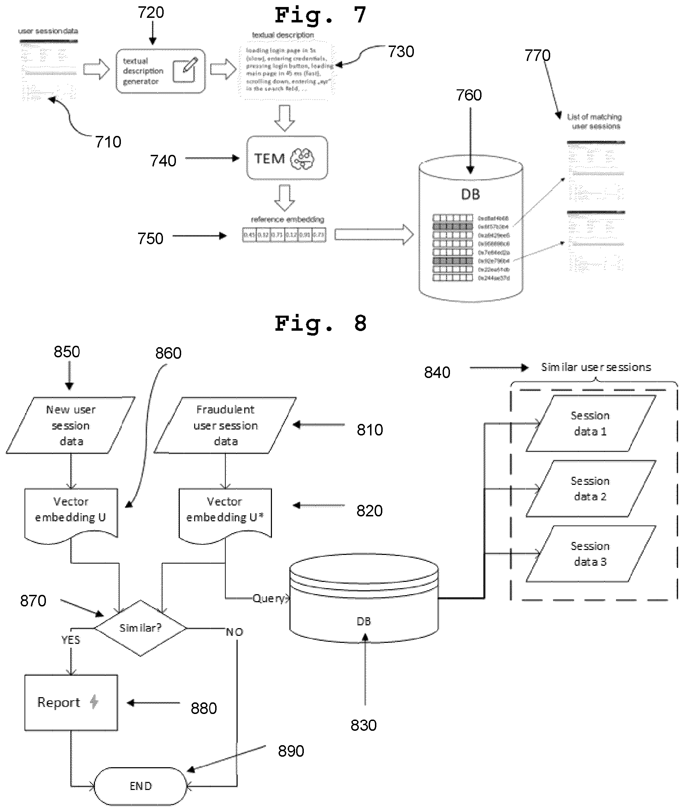

Fig. 7 shows another embodiment for finding similar sessions. As in Fig. 6, the similarity search is based on reference user session data 710. However, instead of generating the reference embedding based on the session data itself, a textual description generator 720 transforms the reference user session data 710 into a textual description 730, and the TEM 740 calculates a reference embedding 750 characterizing the session data 710 based on the textual description. The querying of the database 760 itself can be performed as in Figs. 5 or 6, such that sessions 770 having high similarity to the reference session data are reported to the query customer.

In a first application examples related to APM technology, the identification of sessions involving identity fraud is shown. Assume that a customer operates a webshop and that vector embeddings representing user session are stored in a database. The generation of vector embeddings for user sessions can be performed e.g., according to Fig. 3, where user session data 310 is transformed into a vector embedding 330 by the TEM 320 and the vector embedding 330 is stored in the database, or according to Fig. 4, where user session data 410 is transformed into a textual description 430 first by a textual description generator 420, the TEM 440 transforms the textual description 430 into the vector embedding 450 and the vector embedding 450 is stored in the database. Either way, vector embeddings 330, 450 for user sessions are contained in the database 340, 460.

In a first variant of ID fraud detection, let us assume that user session data for a user session involving identity fraud is known. In this case, it is possible to identify further user sessions similar to the fraudulent user session by querying the database. Querying can be performed e.g., according to Fig. 6 or Fig. 7. In case of Fig. 6, the fraudulent user session data 610 is transformed by the TEM 620 into a reference vector embedding 630, and the database 640 is queried for stored vector embeddings and related user session 650 similar to the fraudulent user session data 610. The procedure according to Fig. 7 is similar, however, the fraudulent user session data 710 is transformed into a textual description 730 first, the TEM 740 generates a reference vector embedding 750 based on the textual description 730, and the database 760 is queried for stored vector embeddings and related user session 770 similar to the fraudulent user session data 710. In both cases, further user sessions stored in a database similar to one or more fraudulent user sessions can be identified.

The procedure is, however, not limited to the identification of user sessions already stored in a database. This will be shown in a second variant of ID fraud detection. Let us assume that a reference vector embedding for a fraudulent user session is known and that further user sessions are being added to the database, e.g., according to Figs. 3 or 4 above. In both cases, it is possible to compute the similarity between the vector embedding 330, 450 for new user sessions and the reference vector embedding. If the similarity between these vector embeddings is high, e.g., greater than or equal to a threshold value, then it is likely that the new user session is fraudulent, which will be reported to the operator of the webshop.

Fig. 8 shows the main steps in the identification of fraudulent sessions. First, it is possible to identify sessions 840 similar to fraudulent user session data 810 contained in the database 830. For this, a vector embedding U* representing the fraudulent user session data 810 is generated by a TEM and references to user session stored in the database 830 having similar vector embeddings to U* are reported to the method customer. Secondly, it is possible to classify new user sessions 850 as fraudulent by generating a vector embedding U, 860 for the new user session 850 and comparing the vector similarity to the vector embedding U* representing a fraudulent user session in a similarity check 870. In case the similarity exceeds a threshold value, the user session 850 is reported as potentially fraudulent in step 880. Another user session 850 can be classified next, or the method ends 890.

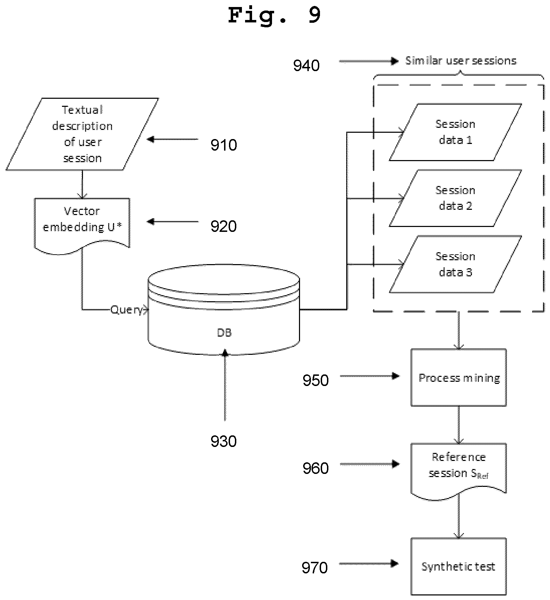

In a second application example related to APM technology, see also Fig. 9, the generation of a synthetic test is shown. In step 910, the user creating the synthetic test inputs a textual description of a user session, e.g. "Please set up a test for all sessions where the user first visits the free trial page and then finds its way to the checkout page". Based on text 910, a TEM generates a vector embedding U* in step 920 This produces a list of the top-k similar sessions, 940. Next, based on the identified similar sessions a process mining step 950 is performed in order to find a reference session $S_{Ref}$ 960 which describes the typical de-facto and noise-free sequence of events underlying the set of user sessions 940.

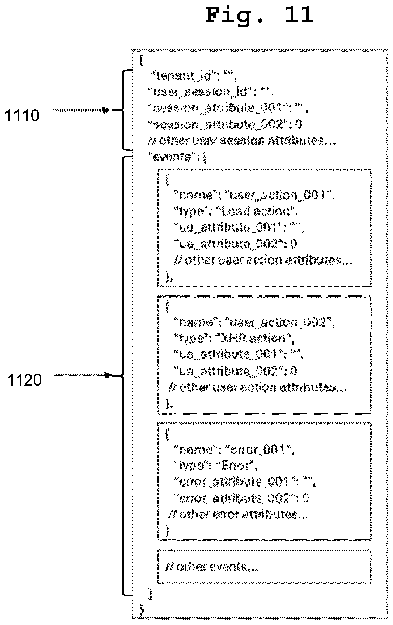

Process mining is known in the art and is a family of techniques used to analyze event data in order to understand and improve operational processes. The main purpose of these algorithms is to identify a process model from a data set of observed events where each event has a case or process ID. When applied to real user monitoring, see e.g. https://dl.acm.org/doi/10.1145/ 3459955.3460593, an event is e.g. a user action, an XHR action or error event, the process maps to the user session, the process ID is the session ID and the data of observed events is the real user monitoring data, organized by sessions and events, recorded by the APM/user monitoring platform (see Fig. 11). The process model, which is the output of a process mining algorithm is typically represented by some sort of execution graph. In the case of a user session this graph would have a page and its state as nodes (think of the document object model, i.e. the DOM, of the page as its state) and events (user actions, XHR actions ...) as edges between them. Depending on the parameterization of the algorithm this user session model contains more or less details, meaning that one can e.g. configure the algorithm to only keep important paths and omit the unimportant (e.g. very infrequent) paths. This is the configuration to use to compute the reference sessions $S_{Ref}$.

Next, the pairs $(action_i, result_i)$ contained in $S_{Ref}$ are applied to a website, e.g., the webshop mentioned above, thereby performing the synthetic test 970. If the website responds to the $i^{th}$ action, $action_i$, with the expected result, $result_i$, then the next action, the $(i+1)^{th}$ action, $action_{i+1}$, is performed. If the website passes all actions, then the synthetic test is passed. Otherwise, the test is failed. Preferably, the synthetic test is performed not just in one location but in various locations around the globe. By doing so, local or regional problems, e.g. due to internet connectivity issues, can be identified.

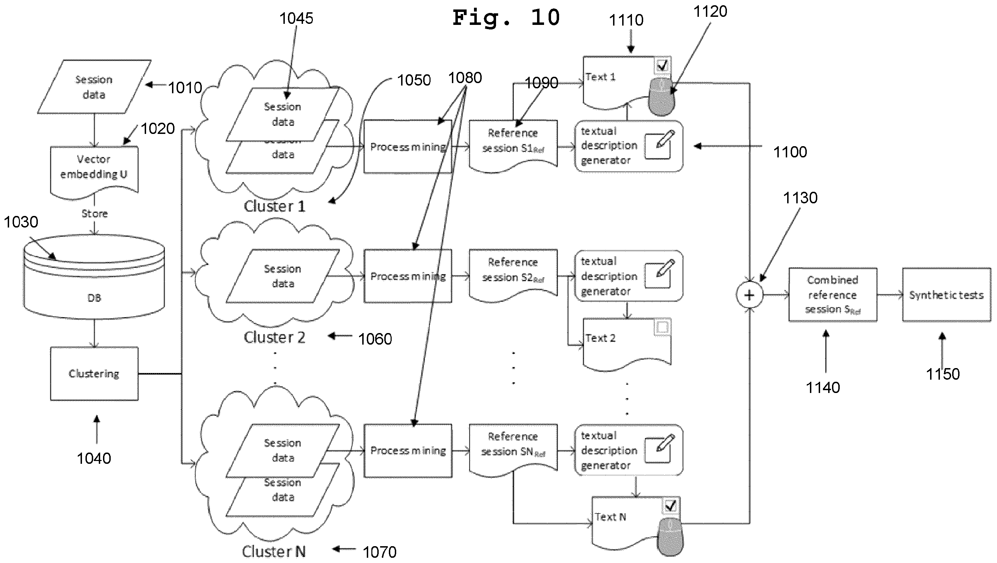

Finally, in a third application example related to APM technology, see also Fig. 10, the generation of a synthetic test suite (also referred to as combined reference session) 1140 is shown. In this example it is assumed that vector embeddings U, 1020 and the corresponding session data 1010 were added to a database 1030. Thus, the database 1030 comprises many different user or business sessions together with their computed vector embeddings as depicted in Figs. 3 or 4. In step 1040, clustering of session data in the database 1030 is performed based on the vector embeddings. The result of the clustering is one or more clusters of session data, see cluster 1, 1050, cluster 2, 1060 to cluster N, 1070. It is beneficial to use a clustering algorithm that can accommodate for outliers, e.g. the DBSCAN algorithm, or an algorithm specifically designed for the clustering of vector embeddings, such as the one described in https://link. springer.com/article/10.1007/s40747-021-00512-9, as otherwise non-compact clusters may be formed. Each cluster contains a set of similar session data 1045. After having clustered the session data, a process mining step 1080 is performed in which a reference session $S_{Ref}$ is generated for each cluster 1050... 1070. The reference session $S_{Ref}$ constitutes a typical de-facto and noise free sequence of events underlying the set of sessions 1045 in a cluster. For cluster 1, the output is the reference session $S1_{Ref}$, 1090. In order to describe the session data comprised in a cluster, a textual description is generated by a textual description generator 1100. Thus, e.g., for cluster 1, 1050, the textual description 1110 is produced. Doing this for multiple or all clusters allows the user to review the textual descriptions representing the semantic content of the sessions in the clusters. Next, the user selects one or more textual descriptions 1110 of clusters that shall be comprised in the synthetic test suite, e.g., by clicking checkboxes with a pointing device 1120. For the sake of the application example, the user selects the textual descriptions 1110 for cluster 1, 1050 and cluster 3, 1070. After this, in step 1130 the reference sessions $S1_{Ref}$ and $S3_{Ref}$ for the selected clusters 1 and 3 are combined producing a combined reference session $S_{Ref}$, 1140. After having defined the reference session $S_{Ref}$, 1140, the synthetic test is performed in step 1150 as described above.

It is noted that combining different reference sessions with each other in step 1130 is optional, since also a dedicated synthetic test for each cluster makes sense: By performing a synthetic test dedicated to a particular cluster of session data, it is possible to identify which type of sessions causes problems. On the other hand, as the performance of a combined reference session indicates at which action the synthetic test failed, pointers to the action causing problems can also be derived in this case.

Session data added later to the database 1030 can be used to indicate a drift (or obsolescence) of the synthetic monitor (e.g., a new website version is rolled out with fewer checkout steps or button changes position in a page "breaking" the existing synthetic monitor). When such a drift is detected, an updated synthetic monitor can be presented to the user by finding the "new reference session" *closest* to the "old" (existing) reference session $S_{Ref}$, 1140. By doing so, synthetic monitors are updated to keep track of application (webpage) changes.

In general, multiple methods exist for the unsupervised drift detection in the area of machine learning which can be applied to detect drifts, see e.g. https://wires.onlineli-brary.wiley.com/doi/full/10.1002/widm.1381 for an overview.

The schematics of session data in JSON format is shown in Fig. 11. The header 1110 of the session data comprises information about the tenant ID, the user session ID, session attributes etc. corresponding to an array of events 1120. The events are e.g., load actions, XHR actions, errors etc.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

**Claims**

1. A computer-implemented method for semantically analyzing session data captured in a distributed computing system, comprising:

   - receiving, by a computer processor, session data from a session occurring in the distributed computing system;
   - generating, by the computer processor, a textual description for the session data;
   - generating, by the computer processor, a vector embedding from the textual description, where the vector embedding represents the semantics of the session data; and
   - storing, by the computer processor, the vector embedding, along with a reference to the session data, in a database.

2. The method of claim 1 further comprises generating the textual description for the session data using a large language model.

3. The method of claim 1 or 2 further comprises generating the vector embedding using a text embedding model.

4. The method of any of the preceding claims further comprises collecting backend data from host computers in the distributed computing system and generating the textual description using the session data and the backend data.

5. The method of any of the preceding claims further comprises:

   - collecting session data and backend data from computer hosts in the distributed computing system during the performance of the session; and
   - generating the textual description considering session data and backend data.

6. The method of any of the preceding claims further comprises querying the database for session data.

7. The method of claim 6, wherein querying the database further comprises:

   - receiving, by a user interface, session data or a textual description for a target session;
   - generating a target vector embedding from the session data or the textual description; and
   - querying the database using the target vector embedding.

8. The method of claim 7 further comprises:

   - computing a similarity measure between the target vector embedding and the vector embeddings in the database;
   - comparing the similarity measure to a threshold; and
   - reporting vector embeddings having a similarity measure greater than the threshold.

9. The method of claim 8, wherein the similarity measure is further defined as a cosine similarity.

10. A computer-implemented method for identifying fraudulent session data captured in a distributed computing system, comprising:

    - receiving, by a computer processor, new session data from a session occurring in the distributed computing system;
    - generating, by the computer processor, a new vector embedding from the new session data, where the new vector embedding represents the new session data;
    - receiving, by a computer processor, reference session data, where the reference session data is indicative of a fraudulent session;
    - generating, by the computer processor, a reference vector embedding from the reference session data, where the reference vector embedding represents the fraudulent session;

- comparing, by the computer processor, the new vector embedding to the reference vector embedding; and
- reporting, by the computer processor, the new session data as being fraudulent in response to the new vector embedding being similar to the reference vector embedding.

11. The method of claim 10 further comprises generating at least one of the new vector embedding or the reference vector embedding using a text embedding model.

12. The method of claim 10 or 11, wherein comparing the new vector embedding to the reference vector embedding includes computing a similarity measure between the new vector embedding and the reference vector embedding and reporting the new session data as being fraudulent in response to the similarity measure exceeding a threshold.

13. The method of any of claims 10 to 12 further comprises querying a database using the reference vector embedding, where database stores a plurality of vector embeddings and each of the plurality of vector embedding represent a session in the distributed computer system.

14. The method of claim 13, wherein querying the database further comprises:

- computing a similarity measure between the reference vector embedding and each of the plurality of the vector embeddings in the database;
- comparing the similarity measures to a threshold; and
- tagging select vector embeddings in the database as being fraudulent, where the select vector embedding have a similarity measure greater than the threshold.

# Fig. 1

User sessions 〉 Ou Li Wei 〉 Session details

## Session Details

Session started by Ou Li Wei on Oct 17, 2023 - 08:58.
This session consumed **1 user session** of your licensed quota.

Show similar sessions ◄———— 120

◎ **25 s**
Session duration

▤ **Mobile app**
Application type

⚒ **Tolerable**
User experience score

iOS **iOS 11.4.1**
Operating system

▯ **Apple, A1662**
Device manufacturer and name

◉ **Florence, Italy**
Geo location

((•)) **Telecom Italia**
ISP

⬤ **Ou Li Wei**
Real user identifier

⬡ **easyTravel Mobile**
Application name

⚠ **1**
Action with errors

ⓘ **7.9.8**
Application version

▭ **640 x 1136**
Screen resolution

⬚ **87.19.3.163**
IP address

🔒 **Rooted/Jailbroken**
Rooted or jailbroken

◄———— 110

# Fig. 2

User sessions 〉 User sessions query

## User sessions query

Create advanced queries on completed user sessions using user sessions query language.
View Documentation

**user session with errors reaching checkout page** ◄———— 230
◄———— 220

◉ Compare with previous timeframe ⑦    Run semantic query    Run query ◄———— 240

Visualization types: | Bar chart | Line chart | Pie chart | Single value | Funnel | Table only

Run a query to view results

Switch to another visualization type or use the following query format to start
writing your query. For in-depth information, check the documentation.

SELECT * FROM usersession ◄————    Copy    ———— 210

Fig. 3

user session data

320

340

TEM

310

embedding

330    0.45 0.32 0.71 0.12 0.91 0.73

DB

0xd8af4b68
0x8f57b3b4
0xa9429ee5
0x958898c6
0x7e84ed2a
0x92e796b4
0x22ea51db
0x244ae37d

Fig. 4

420

user session data

textual
description
generator

410

textual description

loading login page in 5s
(slow), entering credentials,
pressing login button, loading
main page in 45ms (fast),
scrolling down, entering "xyz"
in the search field...

430

440    460

TEM

embedding

450    0.45 0.32 0.71 0.12 0.91 0.73

DB

0xd8af4b68
0x8f57b3b4
0xa9429ee5
0x958898c6
0x7e84ed2a
0x92e796b4
0x22ea51db
0x244ae37d

Fig. 5

Fig. 6

# Fig. 7

720

730

770

760

user session data

textual description generator

textual description

loading login page in 5s (slow), entering credentials, pressing login button, loading main page in 45 ms (fast), scrolling down, entering „ey" in the search field, ...

710

740 → TEM

reference embedding

750 → |0.45|0.12|0.73|0.12|0.91|0.73|

DB

List of matching user sessions

0x48af4b4b
0x4fd57cbes
0xab425ee5
0x566886c6
0x7e66e05e
0x92e796b4
0x22 me54db
0x244ae37d

# Fig. 8

850

860

840 → Similar user sessions

New user session data

Fraudulent user session data ← 810

Session data 1

Vector embedding U

Vector embedding U* ← 820

Session data 2

Session data 3

870 → Similar?

Query

DB

YES

NO

Report ⚡ ← 880

830

END ← 890

# Fig. 9

Fig. 10

## Fig. 11

```
{
  "tenant_id": "",
  "user_session_id": "",
  "session_attribute_001": "",
  "session_attribute_002": 0
  // other user session attributes...
  "events": [

    {
      "name": "user_action_001",
      "type": "Load action",
      "ua_attribute_001": "",
      "ua_attribute_002": 0
      // other user action attributes...
    },

    {
      "name": "user_action_002",
      "type": "XHR action",
      "ua_attribute_001": "",
      "ua_attribute_002": 0
      // other user action attributes...
    },

    {
      "name": "error_001",
      "type": "Error",
      "error_attribute_001": "",
      "error_attribute_002": 0
      // other error attributes...
    }

    // other events...

  ]
}
```

1110

1120

Europäisches
Patentamt
European
Patent Office
Office européen
des brevets

# EUROPEAN SEARCH REPORT

**Application Number**

EP 24 21 0366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG XU ZHANGXU037@SMAIL NJU EDU CN ET AL: "Robust log-based anomaly detection on unstable log data", PROCEEDINGS OF THE 2019 27TH ACM JOINT MEETING ON EUROPEAN SOFTWARE ENGINEERING CONFERENCE AND SYMPOSIUM ON THE FOUNDATIONS OF SOFTWARE ENGINEERING, ACMPUB27, NEW YORK, NY, USA, 12 August 2019 (2019-08-12), pages 807-817, XP058458719, DOI: 10.1145/3338906.3338931 ISBN: 978-1-4503-5572-8 * sections 1, 3.1, 3.2.1, 3.2.2 and 3.4; figures 3,6 * | 1-14 | INV. G06F16/353 |

-----

**TECHNICAL FIELDS SEARCHED (IPC)**

G06F

The present search report has been drawn up for all claims

| Place of search | Date of completion of the search | Examiner |
|---|---|---|
| The Hague | 25 February 2025 | Hackelbusch, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)